# FASCICULE DE BREVET EUROPEEN

(11) **EP 1 358 421 B1**
(45) Date de publication et mention de la délivrance du brevet: **27.10.2004**
(21) Numéro de dépôt: 02701403.4
(22) Date de dépôt: 04.02.2002
(51) Int. Cl.: F16L 15/06

(54) **JOINT FILETE TUBULAIRE A FILETS TRAPEZOIDAUX AVEC FACE DE FILET BOMBEE CONVEXE**
VERSCHRAUBBARE ROHRVERBINDUNG MIT TRAPEZFÖRMIGEM GEWINDE MIT KONVEX GEWÖLBTER GEWINDEFLÄCHE
TUBULAR THREADED JOINT WITH TRAPEZOID THREADS HAVING CONVEX BULGED THREAD SURFACE

(30) Priorité: 09.02.2001 FR 0101793
(43) Date de publication de la demande: 05.11.2003
(73) Titulaire: VALLOUREC MANNESMANN OIL & GAS FRANCE, 59620 Aulnoye-Aymeries (FR); SUMITOMO METAL INDUSTRIES, LTD., Osaka-shi, Osaka 541-0041 (JP)
(72) Inventeur: NOEL, Thierry, F-59990 Sebourg (FR); ROUSSIE, Gabriel, F-59370 Mons en Baroeul (FR); VARENNE, Emmanuel, F-69400 Villefranche-sur-Saône (FR)
(74) Mandataire: Pellicani, Félix Angelo
(86) Numéro de dépôt international: PCT/FR2002/000420
(87) Numéro de publication internationale: WO 2002/065012

(56) Documents cités:
- WO-A-00/14442
- GB-A- 2 074 685
- US-A- 2 681 815

## Description

L'invention concerne les joints filetés tubulaires comprenant un élément fileté mâle et un élément fileté femelle à filets trapézoïdaux disposés en extrémité de tubes à assembler, les éléments filetés pouvent être disposés aussi bien en extrémité de tubes de grande longueur que de tubes de faible longueur tels que des manchons.

De tels joints filetés tubulaires sont notamment utilisés pour constituer des colonnes de tubes de cuvelage ou de production ou des trains de tiges de forage pour des puits d'hydrocarbures ou pour des puits similaires tels que des puits pour la géothermie.

Ils sont par exemple définis par les spécifications API 5B et 5CT de l'American Petroleum Institute (API) avec des filetages coniques à filets trapézoïdaux dits "Buttress".

Les filets trapézoïdaux comprennent un flanc d'engagement du côté des filets dirigé vers l'extrémité libre de l'élément fileté considéré, un flanc porteur du côté opposé des filets, un sommet de filet de largeur non nulle et un fond de filet de largeur également non nulle, les flancs porteurs et les flancs d'engagement étant d'orientation sensiblement perpendiculaire à l'axe de l'élément fileté (inclinaison de +3° pour les flancs porteurs, de +10° pour les flancs d'engagement par exemple dans le cas du filet API Buttress).

Les filets trapézoïdaux sont ainsi définis dans le présent document par opposition à d'autres types de filets définis par les spécifications API précitées, à savoir les filets triangulaires ou triangulaires arrondis ("ronds") dont les flancs porteurs et d'engagement sont fortement inclinés par rapport à la normale à l'axe de l'élément fileté (de 30° par exemple) et dont les sommets et fonds de filet sont de largeur sensiblement nulle. Ils présentent par rapport aux firets triangulaires ou ronds des avantages importants vis-à-vis du risque inacceptable de désengrènement ("jump out").

Les joints filetés tubulaires à filets trapézoïdaux selon AP ont fait l'objet de nombreux développements, notamment pour améliorer leur résistance eux sollicitations très diverses résultant des conditions d'exploitation (traction axiale, compression axiale, flexion, torsion, pression intérieure ou extérieure...) et leur étanchéité aux fluides circulant à l'intérieur ou à l'extérieur de ces joints sous de telles sollicitations. Ces améliorations sont par exemple décrites dans les documents EP 488 912, EP 707 133, EP 454 147, WO 00/14441.

D'autres types de joints filetés à filets trapézoïdaux décrits par exemple dans les brevets US 4 521 042 ou US 4 570 982 et destinés au même usage mettent en oeuvre des filetages cylindriques, notamment à double étage.

De manière générale les faces des filets trapézoïdaux des joints filetés de l'état de la technique c'est-à-dire les flancs de filets ainsi que les sommets et fonds de filets apparaissent rectilignes en coupe axiale hormis au niveau des raccordements entre faces, raccordements qui présentent généralement un rayon de raccordement ou un chanfrein ; c'est pourquoi on appellera de telles faces dans le présent document des faces rectilignes.

Dans tous ces types de joints filetés tubulaires, on développe, en fin de vissage des éléments filetés l'un dans l'autre, un contact avec pression de contact entre au moins une face de filet mâle et la face correspondante du filet femelle. Selon le type de filetage, cette pression de contact peut se développer entre sommets et fonds de filet conjugués, entre flancs porteurs, entre flancs d'engagement ou entre plusieurs de ces faces.

Le développement d'une pression de contact entre faces correspondantes de filets trapézoïdaux (et éventuellement entre d'autres surfaces telles que des portées d'étanchéité et des surfaces transversales de butée disposées de manière correspondante sur les éléments filetés) résulte de la nécessité de visser le joint fileté sous un couple notable de vissage

Une fois le joint fileté assemblé sous un couple de vissage donné, on constate sur les joints filetés connus qu'il suffit d'appliquer un couple à peine supérieur en valeur absolue au couple de vissage pour, selon le sens de ce couple, survisser ou dévisser le joint fileté.

Un survissage peut notamment survenir lors de la descente en rotation d'une colonne de tubes au fond de puits d'hydrocarbures déviés voire horizontaux et occasionner un écart de positionnement relatif des éléments mâles et femelles avec pour conséquence néfaste un risque de fuite des joints filetés.

Un dévissage accidentel dans un puits peut avoir des conséquences encore plus graves.

On a donc cherché par l'invention à réaliser des joints filetés tubulaires à filets trapézoïdaux qui une fois vissés nécessitent, pour aller au-delà de leur position de vissage ou pour les dévisser, des couples sensiblement supérieurs en valeur absolue au couple dit de vissage sans que ces joints filetés tubulaires soient sensibles au grippage.

On a aussi cherché à éviter les grippages résultant de pressions de contact excessives entre faces correspondantes de filet, notamment entre flancs correspondants de filet.

On a particulièrement cherché à éviter les grippages dans le cas de filetages à frettage axial ou à filets coins décrits par exemple respectivement dans les demandes de brevet WO 00/14441 et WO 94/29627 où un contact frettant se produit à la fois entre flancs porteurs et flancs d'engagement des filets, les pressions de contact développées entre les flancs en contact frettant étant très sensibles à la géométrie effective des filets mâles et femelles et donc à leur appariement.

Ceci oblige à usiner les filetages avec une grande précision, donc à un coût élevé. On a aussi cherché à ce que de tels joints filetés tubulaires avec des filets coins ou des filets à frettage axial puissent être usinés avec des tolérances dimensionnelles normales, par exemple de l'ordre de 0,01 mm.

Le joint fileté tubulaire selon l'invention comprend un élément fileté mâle en extrémité d'un premier tube et un élément fileté femelle en extrémité d'un second tube.

L'élément fileté mâle comporte extérieurement un filetage mâle à filets trapézoïdaux sur sensiblement toute la longueur du filetage et l'élément fileté femelle comporte intérieurement un filetage femelle conjugué du filetage mâle, c'est-à-dire de forme et de disposition adaptées à leur vissage. Les éléments filetés mâles et femelles sont vissés l'un dans l'autre sous un couple de vissage donné de sorte qu'au moins une face de filet mâle est sous pression de contact avec la face correspondante du filetage femelle.

Par filetage, on entend un filetage en une seule ou plusieurs parties filetées. Dans ce dernier cas, les filets sont trapézoïdaux sur sensiblement toute la longueur de chacune des parties filetées.

Au moins une face de filet sous pression de contact d'un filetage possède avant vissage une forme bombée convexe continue sur la largeur de la face considérée et est en contact dit ponctuel avec la face correspondante du filetage conjugué.

On entend dans le présent document par face bombée convexe une face de filet qui apparaît comme curviligne convexe en coupe axiale. De même on entend respectivement par face bombée concave et par face rectiligne des faces qui apparaissent comme telles en coupe axiale (hormis au niveau des raccordements avec les faces adjacentes).

Le terme « largeur » de face désigne dans le présent document la dimension de la face vue en coupe axiale. Le terme « largeur » de face désigne par conséquent la dimension essentiellement axiale de sommets ou de fonds de filet et la dimension essentiellement radiale de flancs de filet.

Le terme "filet trapézoïdal" correspond à la définition générale qui a été donnée ci-avant même si certaines faces ne sont pas rectilignes dans le cas de la présente invention. II recouvre des filets trapézoïdaux avec des angles de flancs porteurs et d'engagement tant positifs que négatifs ou nuls (filets carrés, en crochet, en semi-queue d'aronde ou en queue d'aronde), la convention de signe étant illustrée dans les modes de réalisation exposés plus loin dans le texte.

Une face bombée convexe telle que définie crée avec la face correspondante du filetage conjugué un contact qui apparaît, selon une coupe passant par l'axe de l'assemblage, comme ponctuel ou sensiblement ponctuel pourvu, bien sûr, que les rayons de courbure des faces correspondantes soient adaptés.

La pression de contact résultant dudit contact ponctuel est maximale au niveau du point de contact et décroît de chaque côté de ce point plus ou moins rapidement selon les écarts de rayon de courbure des deux faces en contact et les caractéristiques d'élasticité des matériaux en contact.

La courbure de la face bombée convexe est choisie pour que le joint fileté selon l'invention présente, une fois vissé sous le couple de vissage donné comparativement à un joint fileté conventionnel dont toutes les faces de filets mâles et femelles sont rectilignes, une résistance sensiblement accrue au dévissage ou au survissage.

II faut en effet de manière surprenante appliquer un couple nettement supérieur en valeur absolue au couple de vissage, en moyenne un couple supérieur d'au moins 5 % au couple de vissage, pour selon le sens du couple appliqué survisser ou dévisser le joint fileté selon l'invention une fois celui-ci vissé au couple de vissage spécifié. On s'attendrait à priori au contraire, c'est-à-dire à une résistance accrue au dévissage/survissage pour le joint fileté à faces de filets rectilignes qui présente a priori de plus grandes surfaces de frottement.

En outre, compte tenu des charges auxquelles sont soumises les faces de filets de joints filetés tubulaires, notamment dans le cas de joints filetés tubulaires mis en oeuvre pour l'exploitation de puits d'hydrocarbures qui possèdent de faibles largeur et hauteur de filet, l'homme du métier n'était jusqu'à présent pas incité à établir des contacts ponctuels donc non répartis entre faces correspondantes sous pression de contact de filets trapézoïdaux

La courbure de ladite face bombée convexe est également adaptée à la géométrie de la face correspondante en contact pour que la pression maximale ne conduise pas à une plastification du matériau des faces en contact ponctuel.

Avantageusement pour cela, ladite face bombée convexe présente sur sa largeur hormis au niveau des raccordements avec les faces adjacentes un ou des rayons de courbure compris entre 2 et 60 mm et préférentiellement entre 3 et 20mm.

Ladite face bombée convexe peut être réalisée sur toute ou partie de la longueur du filetage considéré mais elle est préférentiellement réalisée sur toute la longueur du filetage considéré et donc sur toute la longueur de chacune des parties filetées lorsque le filetage comporte plusieurs parties filetées.

Préférentiellement, ladite face bombée convexe possède une courbure uniforme sur la largeur de la face considérée hormis au niveau des raccordements avec les faces adjacentes.

Préférentiellement aussi, ladite face bombée convexe possède une courbure uniforme sur toute la longueur du filetage.

Préférentiellement aussi une face bombée convexe correspond avec une face rectiligne sur le filetage conjugué.

De manière très préférentielle, il n'existe qu'une seule face bombée convexe disposée sur un seul filetage, mâle ou femelle.

Selon un mode de réalisation préférentiel de l'invention, les filetages mâle et femelle du joint fileté sont coniques à filets interférant radialement l'un sur l'autre et ladite face bombée convexe est un sommet de filet.

Selon un autre mode de réalisation préférentiel de l'invention, ladite face bombée convexe est un flanc de filet mâle ou femelle et l'un ou l'autre des filets, mâle ou femelle, comprend un moyen pour rendre flexible le flanc bombé convexe ou le flanc correspondant à celui-ci sur le filetage conjugué.

Préférentiellement le flanc bombé convexe est un flanc porteur.

En variante de ce second mode de réalisation, le flanc bombé convexe est un flanc d'engagement.

La flexion du flanc qualifié ainsi de flexible dans la suite du présent document augmente avec la pression de contact au cours ou en fin de vissage et permet notamment aux filets de s'adapter aux écarts de cotes dimensionnelles des filetages mâle et femelle par rapport aux cotes nominales sans générer de pression de contact excessive.

Préférentiellement dans ce second mode de réalisation de l'invention, ledit moyen pour rendre flexible le flanc bombé convexe ou le flanc correspondant à celui-ci est une gorge disposée sur le sommet de filet adjacent au flanc flexible.

La flexion de la partie de filet entre gorge et flanc flexible lors d'un contact sous pression de contact induit dans une représentation en coupe axiale une rotation du flanc flexible autour d'un centre de rotation situé au pied du flanc flexible.

Préférentiellement la profondeur de la gorge est inférieure ou égale à la hauteur de filet où elle est réalisée.

Préférentiellement aussi, la gorge possède à son débouché une largeur inférieure ou égale aux 2/3 de la largeur du filet où elle est réalisée, la largeur de filet étant mesurée à mi-hauteur de celui-ci.

Préférentiellement encore, le fond de la gorge est arrondi suivant un rayon supérieur ou égal à 0,2 mm.

Avantageusement dans le cas où le moyen pour diminuer la rigidité d'un flanc de filet est une gorge, l'angle appelé « angle de flanc bombé convexe » formé par la tangente au flanc bombé convexe à mi-hauteur de celui-ci et la normale à l'axe de l'assemblage est différent de l'angle appelé « angle de flanc correspondant » formé par la tangente au flanc correspondant au flanc bombé convexe prise également à mi-hauteur dudit flanc correspondant et la normale à l'axe de l'assemblage.

Une telle différence entre ces angles entraîne un déplacement du point de contact entre flanc bombé convexe et flanc correspondant le long de ces flancs lors de la mise en flexion du flanc flexible en fin de vissage ou en fonction des sollicitations axiales en service.

Un tel déplacement du point de contact évite de toujours solliciter le même point du flanc bombé convexe et du flanc correspondant, ce qui tend à réduire les risques de grippage de ces flancs après plusieurs vissages-dévissages.

Très avantageusement dans ce cas, les valeurs de l'angle de flanc bombé convexe et de l'angle de flanc correspondant sont telles que le premier contact entre le flanc bombé convexe et le flanc correspondant a lieu sur le flanc flexible du côté du sommet de filet où est implantée la gorge.

Très avantageusement aussi, le signe de la valeur algébrique du décalage entre l'angle de flanc bombé convexe et l'angle de flanc correspondant est tel que le point de contact entre le flanc bombé convexe et le flanc correspondant se déplace au cours du vissage vers le centre de rotation du flanc flexible.

Très avantageusement encore, la valeur du décalage entre l'angle de flanc bombé convexe et l'angle de flanc correspondant est telle que le point de contact final entre le flanc bombé convexe et le flanc correspondant une fois le joint fileté totalement vissé se situe en dehors du quart de largeur du flanc bombé convexe situé en extrémité de celui-ci du côté pied de filet.

Une telle disposition permet d'éviter des concentrations de contraintes excessives et néfastes au niveau du pied de filet.

Les valeurs de l'angle de flanc bombé convexe et de l'angle de flanc correspondant pour obtenir de tels effets techniques sont déterminables par calcul ou par essais ainsi qu'on le verra dans les modes de réalisation exposés.

Préférentiellement, la valeur absolue du décalage entre l'angle de flanc bombé convexe et l'angle de flanc correspondant est comprise entre 1 et 5°.

Préférentiellement sur le joint fileté selon l'invention, chaque élément mâle et femelle comprend au moins une portée d'étanchéité, chaque portée d'étanchéité mâle interférant radialement avec une portée d'étanchéité femelle correspondante sur le joint fileté tubulaire à l'état vissé en position.

Préférentiellement aussi sur le joint fileté selon l'invention, chaque élément mâle et femelle comprend au moins une surface annulaire transversale de butée, au moins une surface de butée mâle étant en appui contre une surface de butée femelle correspondante sur le joint fileté tubulaire à l'état vissé en position.

Les figures ci-après décrivent de manière schématique et différents modes de réalisation et d'utilisation de joints filetés tubulaires selon l'invention.

La figure 1 décrit un assemblage fileté manchonné comportant deux joints filetés à filetages coniques et filets trapézoïdaux.

La figure 2 décrit un assemblage fileté intégral comportant un joint fileté à filetages cylindriques bi-étagés et filets trapézoïdaux.

La figure 3 décrit quelques filets trapézoïdaux d'un joint fileté selon l'invention du type de la figure 1 dans lequel les sommets de filet femelles sont bombés convexes : la figure 3A se rapporte au filetage femelle seul, la figure 3B se rapporte au filetage mâle seul et la figure 3C se rapporte à l'assemblage terminé des éléments des figures 3A et 3B.

La figure 4 décrit quelques filets d'un autre joint fileté selon l'invention, le joint fileté étant du type de la figure 1 avec des filets trapézoïdaux à frettage axial dont le flanc d'engagement mêle est bombé convexe.

La figure 5 décrit une variante du joint fileté de la figure 4.

La figure 6 décrit quelques filets d'un autre joint fileté selon l'invention, du type de la figure 2 avec des filets trapézoïdaux coins à largeur variable dont le flanc porteur mâle est bombé convexe.

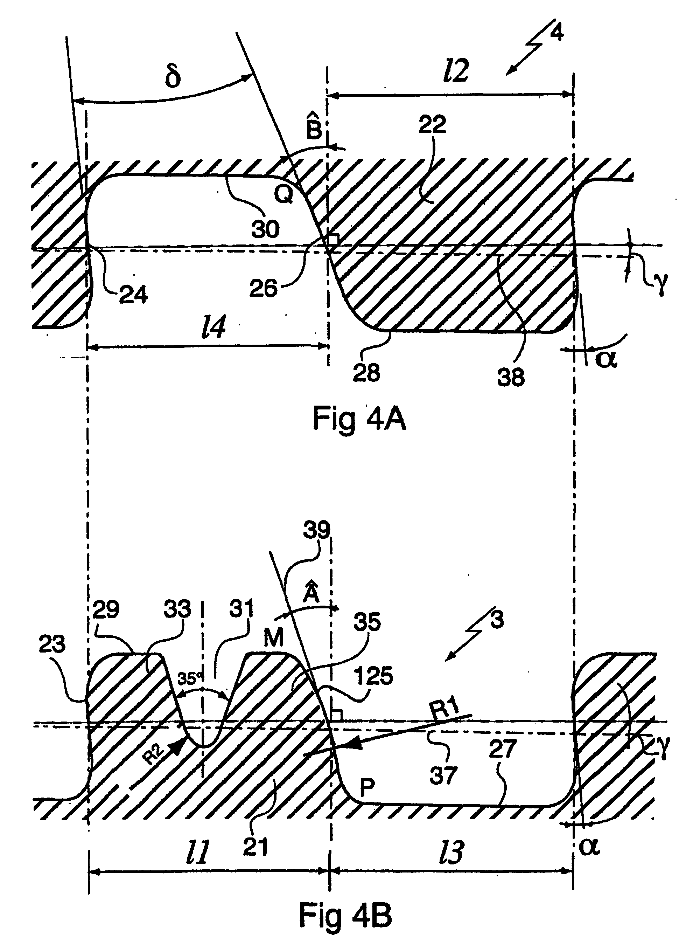

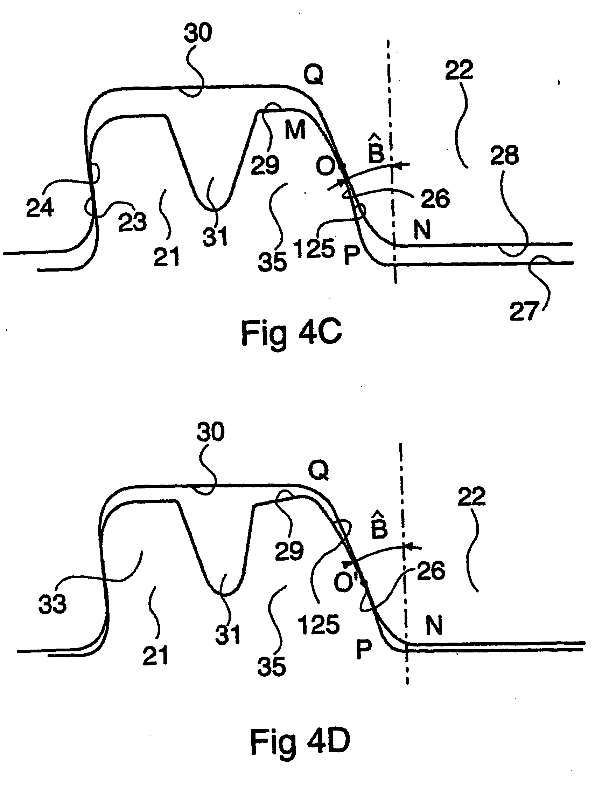

Les figures 4 à 6 comprennent chacune 4 sous-figures repérées par les indices A à D : L'indice A se rapporte au filetage femelle seul tandis que l'indice B se rapporte au filetage mâle seul. L'indice C se rapporte à l'assemblage des éléments des indices A et B en cours de vissage au point où les faces correspondantes arrivent en contact. L'indice D se rapporte à l'assemblage terminé des éléments des indices A et B.

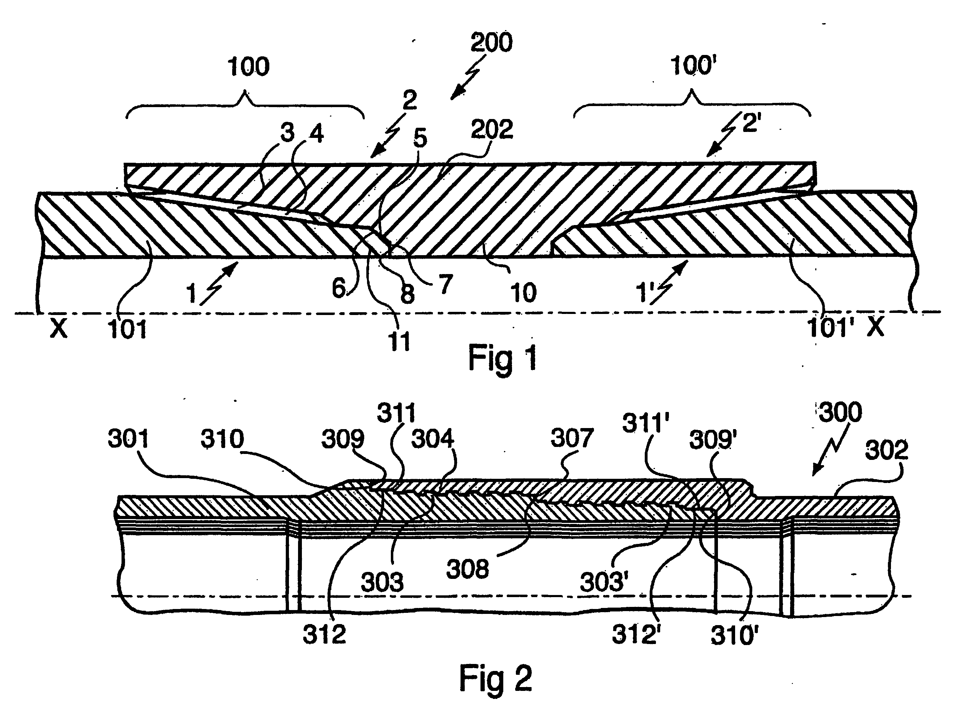

Les figures 1 à 6 ne sont pas à l'échelle, les caractéristiques des joints filetés ayant été exagérées pour mieux les mettre en évidence ou mieux en faire comprendre le fonctionnement.

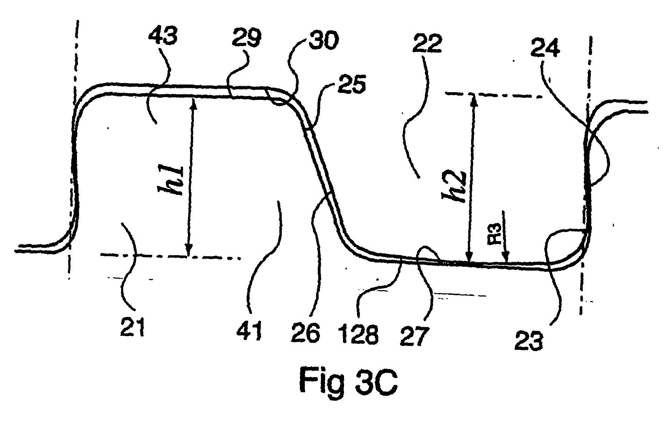

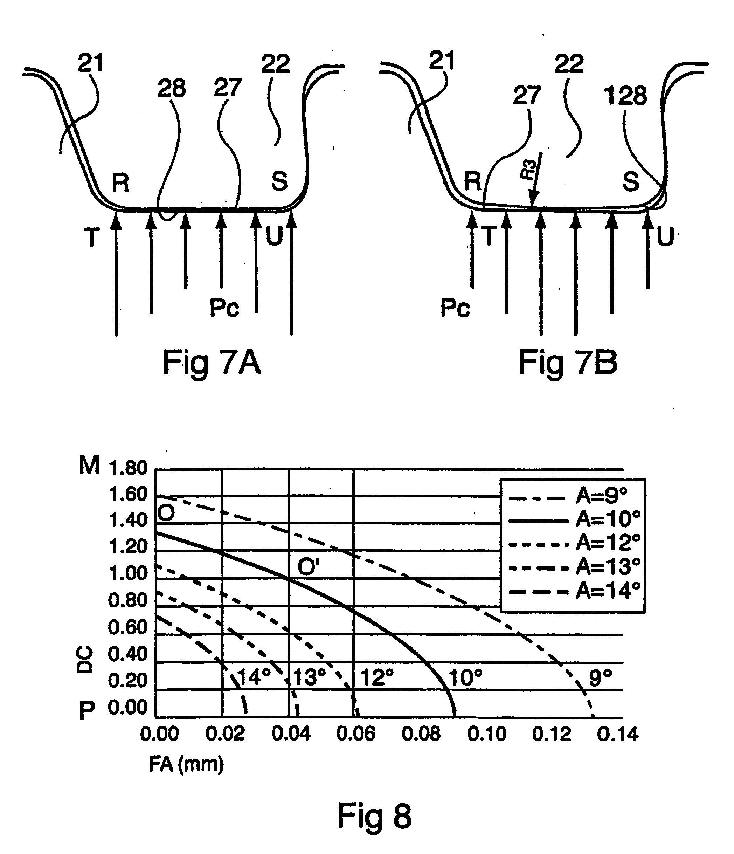

La figure 7 représente la répartition des pressions de contact entre sommet mâle et fond femelle de filets trapézoïdaux interférents, la figure 7A étant relative au contact entre sommet et fond rectilignes d'un joint fileté de l'état de la technique et la figure 7B au contact entre fond rectiligne et sommet bombé convexe du joint fileté de la figure 3C.

La figure 8 est un graphique représentant le déplacement du point de contact frettant dans le cas des filets de la figure 4 en fonction du vissage pour différentes configurations angulaires des flancs d'engagement.

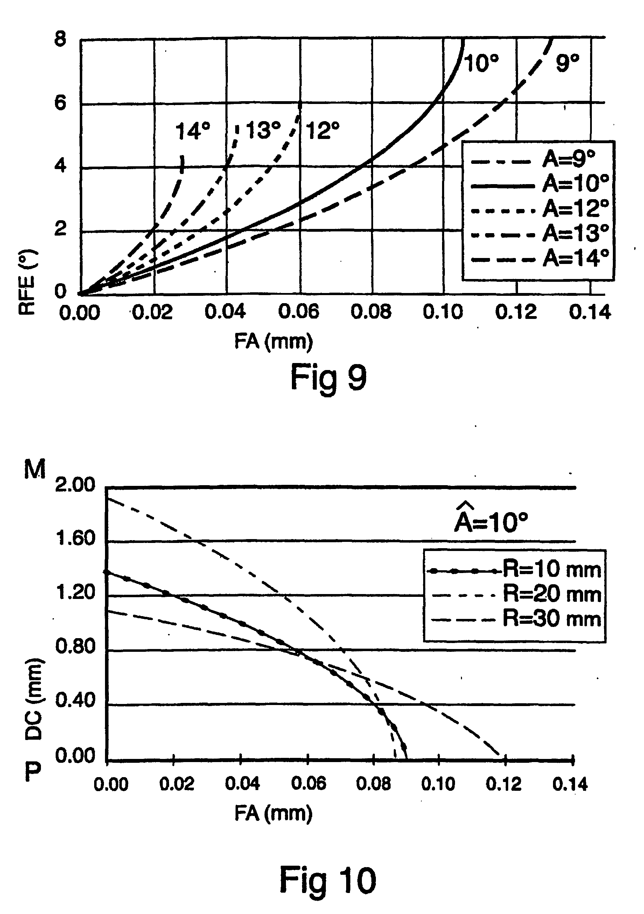

La figure 9 est un graphique représentant la rotation du flanc d'engagement flexible de la figure 4 en fonction du vissage pour différentes configurations angulaires des flancs d'engagement.

La figure 10 est un graphique représentant le déplacement du point de contact frettant dans le cas des filets de la figure 4 en fonction du vissage pour différents rayons de courbure de la face bombée convexe.

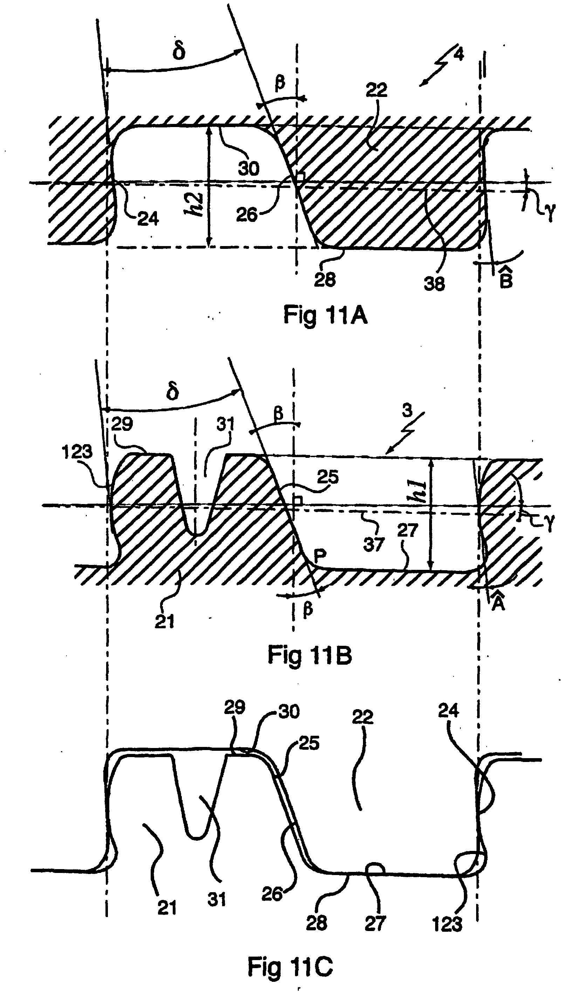

La figure 11 représente quelques filets d'un autre joint fileté selon l'invention du type de la figure 1 avec des filetages coniques à filets trapézoïdaux interférents.

La figure 1 représente un assemblage fileté manchonné 200 entre deux tubes de grande longueur 101, 101'.

Par tube de grande longueur, on entend des tubes de plusieurs mètres de longueur, par exemple d'environ 10 m de longueur.

De tels tubes sont couramment assemblés pour constituer des colonnes de tubes de cuvelage ou de production pour les puits d'hydrocarbures ou des trains de tiges de forage pour les mêmes puits.

Les tubes peuvent être réalisés en toutes sortes d'aciers non alliés, faiblement alliés ou fortement alliés, voire en alliages ferreux ou non ferreux pour s'adapter aux différentes conditions de service : niveau de sollicitation mécanique, caractère corrosif du fluide intérieur ou extérieur aux tubes.

On peut également utiliser des tubes en acier peu résistant à la corrosion munis d'un revêtement par exemple en matériau synthétique empêchant tout contact entre l'acier et le fluide corrosif.

Les tubes 101, 101' sont munis à leurs extrémités d'éléments filetés mâles identiques 1, 1' et sont assemblés par l'intermédiaire d'un manchon 202 muni à chaque extrémité d'un élément fileté femelle 2, 2'.

Les éléments filetés mâles 1, 1' sont respectivement assemblés par vissage dans les éléments filetés femelles 2, 2' en constituant deux joints filetés 100, 100' symétriques réunis par un talon 10 de quelques centimètres de longueur.

Le talon 10 du manchon possède un diamètre intérieur sensiblement identique à celui des tubes 101, 101' de sorte que l'écoulement du fluide circulant intérieurement n'est pas perturbé.

Les joints filetés 100, 100' étant symétriques, on ne décrira le fonctionnement que d'un seul de ces joints.

L'élément fileté mâle 1 comprend un filetage mâle 3 à filets trapézoïdaux dérivés du type dit « Buttress » selon spécification API 5B ; ce filetage mâle 3 est conique et disposé sur l'extérieur de l'élément mâle et il est séparé de l'extrémité libre 7 dudit élément par une lèvre non filetée 11. L'extrémité libre 7 est une surface annulaire sensiblement transversale de butée.

Jouxtant l'extrémité libre 7 sur la surface extérieure de la lèvre 11 se trouve une surface conique de portée 5 dont la conicité est supérieure à celle du filetage mâle 3.

L'élément femelle 2 comprend des moyens conjugués de ceux de l'élément mâle 1, c'est-à-dire qu'ils correspondent de par la forme et sont destinés à coopérer de par leur disposition avec les moyens mâles.

L'élément femelle 2 comprend ainsi intérieurement un filetage femelle conique 4 et une partie non filetée entre le filetage et le talon 10.

Cette partie non filetée comprend notamment une surface annulaire d'orientation sensiblement transversale de butée 8 formant épaulement à l'extrémité du talon et une surface conique de portée 6 à la suite de l'épaulement.

Après vissage complet du filetage mâle dans le filetage femelle, les surfaces transversales de butée 7 et 8 sont en appui l'une contre l'autre tandis que les surfaces de portée 5, 6 interfèrent radialement et sont de ce fait sous pression de contact métal-métal. Les surfaces de portée 5, 6 constituent ainsi des portées d'étanchéité qui rendent le joint fileté étanche même pour des pressions de fluide intérieur ou extérieur élevées et pour des sollicitations diverses (traction axiale, compression axiale, flexion, torsion...).

On peut aussi intégrer dans les filetages un anneau d'étanchéité en matériau synthétique tel qu'un fluoropolymère pour réaliser ou renforcer l'étanchéité.

Un autre exemple d'assemblage fileté entre deux tubes de grande longueur est illustré à la figure 2, ce type d'assemblage 300 qui ne met en oeuvre qu'un seul joint fileté étant qualifié d'intégral.

Le tube 301 est muni à une de ses extrémités d'un élément fileté mâle 1, le second tube 302 étant muni d'un élément fileté femelle 2 à l'extrémité correspondante.

L'élément fileté mâle 1 comprend un filetage mâle extérieur constitué dans le cas de la figure 2 de deux étages ou gradins cylindriques 303, 303', à filets trapézoïdaux séparés par une surface annulaire transversale 307 d'un épaulement central formant butée, le gradin de plus faible diamètre 303' étant disposé du côté extrémité libre 309' de l'élément, laquelle extrémité libre 309' est une surface annulaire transversale.

Entre partie filetée 303' et surface d'extrémité 309' se trouve extérieurement une surface de portée conique 311'.

A l'opposé sur l'élément mâle, la partie filetée 303 est prolongée par une partie non filetée comprenant une surface de portée conique 311 et une surface annulaire transversale 309 formant épaulement.

L'élément fileté femelle 2 comprend intérieurement des moyens femelles conjugués des moyens mâles.

L'élément femelle 2 comprend ainsi un filetage femelle constitué de 2 gradins cylindriques 304, 304' séparés par une surface annulaire transversale 308 d'un épaulement central formant butée, le gradin de plus grand diamètre 304 étant disposé vers l'extrémité libre annulaire transversale 310 de l'élément femelle.

L'élément femelle comprend en outre, deux surfaces coniques de portée 312, 312' correspondant aux surfaces de portée mâles 311, 311' et une surface annulaire transversale 310' formant épaulement à l'extrémité de l'élément opposée à l'extrémité libre 310.

A l'état vissé, les parties filetées mâles 303, 303' sont vissées respectivement dans les parties filetées femelles 304, 304' et les surfaces de butée des épaulements centraux 307, 308 sont en appui l'une cantre l'autre. Les surfaces transversales d'extrémité 309, 309' sont en quasi-contact avec celles d'épaulement respectivement 310, 310' et constituent des butées auxiliaires pour la butée principale centrale 307, 308.

Les surfaces de portée mâles 311, 311' interfèrent radialement respectivement avec les surfaces de portée femelles 312, 312' en développant des pressions de contact métal-métal élevées aptes à assurer l'étanchéité du joint vis-à-vis de fluides extérieurs ou intérieurs.

En variantes non représentées, l'assemblage fileté manchonné peut être à filetages cylindriques et l'assemblage intégral à filetages coniques.

Les filetages peuvent aussi être chacun à deux parties filetées coniques de conicité identique ou différente ou du type cylindro-conique, les parties filetées d'un même filetage pouvant être étagées ou non étagées.

Dans les figures 1 et 2, les filetages ont été schématisés par les génératrices ou les enveloppes de sommet de filet et de fond de filet.

Les figures suivantes permettent de décrire les filets de joints filetés selon plusieurs variantes de l'invention.

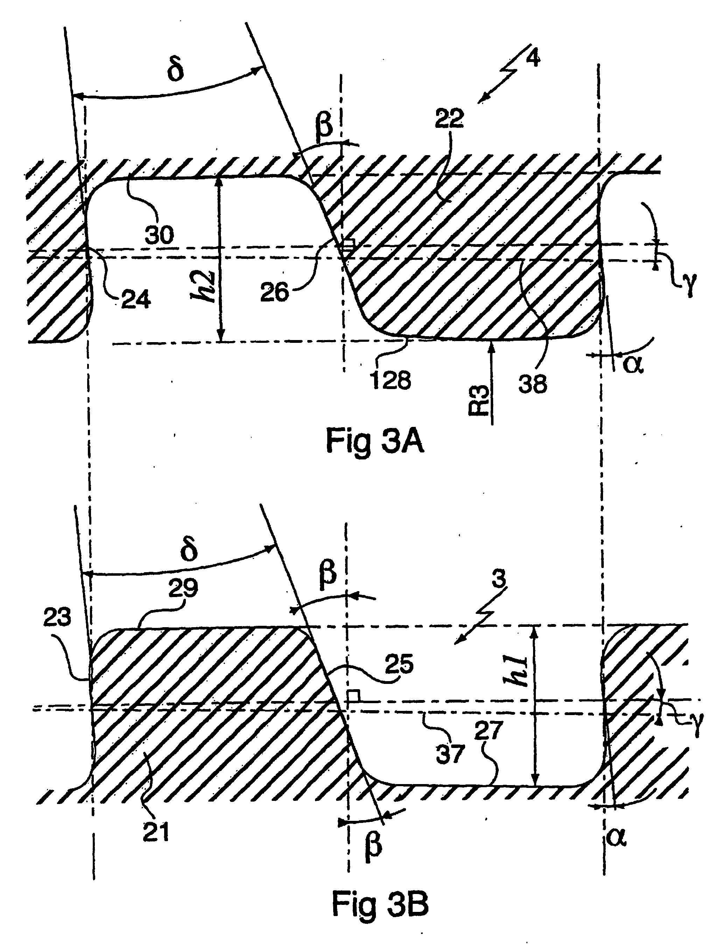

La figure 3 est relative à des filetages coniques à filets trapézoïdaux interférents radialement et à sommets de filet bombés convexes d'un joint fileté 100 de la figure 1.

La figure 3B représente les filets mâles 21 de ce type de joint fileté qui ont une forme trapézoïdale classique en coupe axiale et qui comportent un flanc porteur 23, un flanc d'engagement 25, un sommet de filet 29 et un fond de filet 27. Leur hauteur est h1 et leur largeur à mi-hauteur est de 2,5 mm (filetage du type 5 filets par pouce).

Les sommets et fonds de filets sont disposés sur des surfaces coniques de même conicité définie par le demi-angle au sommet **γ** entre le cône « primitif » symbolisé par sa génératrice 37 et la direction de l'axe de l'assemblage.

Les sommets de filet 29 et les fonds de filet 27 sont rectilignes hormis au niveau des raccordements avec les flancs ; ces raccordements présentent de manière connue en soi un rayon de l'ordre de la fraction de mm pour limiter les concentrations de contraintes des fonds de filet et la fragilité des arêtes; les sommets de filet 29 et les fonds de filet 27 sont disposés sur des surfaces coniques de demi-angle au sommet γ.

Les flancs porteurs 23 et d'engagement 25 sont également rectilignes et font respectivement un angle α et β avec la normale à l'axe de l'assemblage.

Dans le cas présent, α est légèrement négatif (le flanc 23 surplombe quelque peu le fond de filet 27) alors que l'angle β est positif et davantage incliné.

II s'ensuit que les flancs forment entre eux un angle δ tel que les filets trapézoïdaux 21 sont moins larges à leur sommet 29 qu'à leur base.

Les filets femelles 22 sont représentés figure 3A.

Leur forme est sensiblement trapézoïdale et adaptée au vissage avec les filets mâles 21. Leur hauteur h2 est légèrement supérieure à celle h1 des filets mâles 21 et leur largeur à mi-hauteur est de 2,5 mm (filetage du type 5 filets par pouce).

Les sommets de filet femelle 128 et fonds de filet femelle 30 sont tangents à ou sont disposés sur des surfaces coniques de demi-angle au sommet γ identique à celui relatif aux filets femelles.

Les fonds de filet femelle 30 sont rectilignes hormis au niveau des raccordements avec les flancs qui présentent comme les filets mâles un rayon de raccordement.

Les sommets de filet femelle 128 sont bombés convexes de manière continue sur toute leur largeur, c'est-à-dire qu'ils ne présentent pas de discontinuité sur leur largeur.

Ils possèdent un rayon R3 égal à 5 mm (hormis au niveau des raccordements avec les flancs qui présentent un rayon de raccordement plus faible adapté aux rayons de raccordement des filets mâles)

Les flancs porteurs 24 et d'engagement 26 font respectivement les mêmes angles α et β avec la normale à l'axe de l'assemblage que les flancs correspondants 23, 25 du filetage mâle.

Lorsque l'on visse le filetage mâle 3 dans le filetage femelle 4, à un moment donné un contact se produit entre le sommet de filet femelle 128 bombé convexe et le fond de filet mâle 27 car on s'est arrangé du point de vue géométrique (h2 > h1) pour qu'un jeu subsiste entre sommet de filet mâle 29 et fond de filet femelle 30 qui sont tous deux rectilignes: voir Figure 3C.

Compte tenu de la présence des butées 7, 8 (voir figure 1) qui sont en appui l'une sur l'autre une fois le joint fileté vissé, les éléments mâles et femelles sont sous traction axiale, ce qui fait que les flancs porteurs 23, 24 sont sous pression de contact. Au contraire, il existe un jeu entre flancs d'engagement mâle et femelle 25, 26.

Le contact dit interférent entre le sommet de filet femelle 128 bombé convexe et le fond de filet mâle 27 se produit ponctuellement en O qui est sensiblement au milieu du sommet bombé 128 et du fond rectiligne 27.

La courbure du sommet de filet femelle 128 bombé convexe permet d'accroître la résistance au dévissage ou au survissage du joint fileté selon l'invention.

La figure 7A montre schématiquement la répartition des pressions de contact sur un joint fileté de l'état de la technique entre un sommet de filet femelle 28 de forme rectiligne et un fond de filet mâle 27 correspondant de forme également rectiligne.

Les flèches P_{c} donnent la mesure de la pression locale de contact en chaque point du contact réparti ; on constate que les valeurs de pression de contact P_{c} sont plus élevées à chaque extrémité R, S, T, U des segments de contact.

II s'ensuit que la graisse introduite pour lubrifier les filetages et éviter le grippage tend à être piégée à l'intérieur du segment de contact.

Une fois le vissage terminé sous un couple T_{f} donné, il suffit sur un tel joint fileté de l'état de la technique d'exercer un couple Tₛ de valeur à peine supérieure à T_{f} pour reprendre le vissage compte tenu du lubrifiant piégé dans les segments de contact. Ceci se traduit par un déplacement relatif des éléments mâles et femelles et par un positionnement inadéquat des moyens d'étanchéité.

Les techniques récentes de forage de puits déviés en oblique voire horizontalement nécessitent notamment de faire tourner les tubes et les joints filetés qui les assemblent lors de leur descente dans le puits et donc de soumettre les joints filetés à un couple de torsion important. II est impératif qu'une telle rotation ne conduise pas à des fuites en service.

De même pour dévisser un joint fileté, il faut exercer un couple T_{b} de sens opposé à T_{f} mais ce couple est sur un joint fileté de l'état de la technique en valeur absolue identique au couple de vissage T_{f}.

La figure 7B montre qu'une faible courbure des sommets de filet femelle 128 permet d'éliminer le creux médian de pression de contact et donc le piégeage du lubrifiant entre les sommets de filet femelle 128 et les fonds de filet mâle 27 interférents en créant au contraire un pic médian de pression de contact.

II faut alors exercer un couple T nettement supérieur à T_{f} en valeur absolue pour survisser ou dévisser le joint fileté.

Des essais de vissage-dévissage ont ainsi été effectués sur des joints filetés du type VAM TOP® (selon catalogue VAM® n° 940 édité en juillet 1994 par Vallourec Oil & Gas) modifiés selon figure 3 et de caractéristiques suivantes :
- tubes en acier peu allié traités pour un grade API L80 (limite d'élasticité supérieure ou égale à 552 MPa)
- diamètre extérieur des tubes : 177,8 mm (7")
- épaisseur des tubes : 10,36 mm (29lb/ft)
- filetages à 5 filets par pouce
- conicité filetage = 6,25 % (γ = 1,79°).

On a mesuré les valeurs de couple de dévissage T_{b} pour un vissage sous un couple T_{f} pour 4 joints filetés différents et différents niveaux de couple de vissage.

Sur les 11 essais de vissage-dévissage réalisés, l'écart relatif entre T_{f}et T_{b} varie en valeur absolue entre 3 % et 14 % et il est en moyenne de 7,5 %.

Le choix d'un rayon de courbure R3 trop faible conduit à un pic médian de pression de contact trop accusé et par conséquent à un risque de plastification du matériau et/ou de grippage des filets après plusieurs utilisations des joints filetés; il induit aussi une baisse de la largeur des flancs porteurs 23, 24 et donc de la charge maximale de traction axiale acceptable : un rayon de courbure R3 supérieur ou égal à 2 mm est tout à fait adapté.

Le choix d'un rayon de courbure R3 trop grand ne permet plus d'obtenir l'effet escompté et conduit donc à un risque de piégeage du lubrifiant: un rayon de courbure R3 inférieur ou égal à 60 mm et préférablement à 20 mm est adéquat.

On pourrait encore améliorer la caractéristique avantageuse de résistance au dévissage ou au survissage du joint fileté selon l'invention en réalisant en outre un flanc porteur mâle ou femelle légèrement bombé convexe de manière à éviter tout emprisonnement de graisse au milieu des flancs porteurs.

La figure 4 est relative à des filetages coniques avec des filets trapézoïdaux à frettage axial d'un joint fileté 100 de la figure 1.

On entend par filets trapézoïdaux à frettage axial des filets tels que décrits dans le document WO 00/14441 dans lesquels la largeur des filets à mi-hauteur est supérieure à la largeur également à mi-hauteur des espaces entre filets correspondants du filetage conjugué, ce qui induit un frettage axial des deux flancs de filet d'un filetage par ceux du filetage conjugué et réciproquement.

La figure 4B représente quelques filets mâles 21 qui ont une forme sensiblement trapézoïdale en coupe axiale et qui comportent un flanc porteur 23, un flanc d'engagement 125, un sommet de filet 29 et un fond de filet 27.

Les sommets et fonds de filets sont rectilignes (hormis au niveau des raccordements avec les flancs qui présentent un rayon de l'ordre de la fraction de mm pour limiter les concentrations de contraintes des fonds de filet et la fragilité des arêtes) et sont disposés sur des surfaces coniques de même conicité définie par le demi-angle au sommet γ entre le cône « primitif » symbolisé par sa génératrice 37 et la direction de l'axe de l'assemblage.

Les filets présentent sous toute leur longueur une gorge hélicoïdale 31 dont le profil présente un axe sensiblement normal à celui de l'assemblage qui débouche sur le sommet de filet environ à mi-largeur.

La gorge 31 a un profil en V à fond arrondi, l'angle entre les branches du V est de l'ordre de 35° et le rayon à fond de gorge 61 de 0,4 mm.

Sa largeur au débouché est de l'ordre de 35 % de la largeur du sommet de filet 29 et sa profondeur est de l'ordre de 60 % de la hauteur du filet 21.

Le flanc porteur 23 est rectiligne (hormis au niveau des raccordements avec les sommets et fonds de filet comme il a été indiqué plus haut) et surplombe très légèrement le fond de filet, l'angle α de ce flanc porteur par rapport à la normale à l'axe de l'assemblage étant de ce fait très légèrement négatif, égal à -3°.

Le flanc d'engagement 125 qui est adjacent au sommet de filet 29 est bombé convexe sur toute sa largeur MP ; Il présente un rayon de courbure uniforme R1 de plusieurs mm hormis au niveau des raccordements avec les sommets et fonds de filet où le rayon de courbure est plus faible, de l'ordre de la fraction de mm.

La tangente 39 au flanc d'engagement prise à mi-hauteur de filet fait un angle A avec la normale à l'axe de l'assemblage.

La largeur de filet prise à mi-hauteur de filet est ℓ1 tandis que ℓ3 représente l'espace entre dents de filet à mi-hauteur, la somme (ℓ1 + ℓ3) étant égale au pas du filet.

La figure 4A représente quelques filets trapézoïdaux femelles 22 de forme adaptée à celle des filets mâles 21.

Les filets femelles 22 possèdent 4 faces rectilignes (hormis au niveau des raccordements avec les sommets et fonds de filet qui présentent de manière connue en soi un rayon de l'ordre de la fraction de mm pour limiter les concentrations de contraintes des fonds de filet et la fragilité des arêtes), à savoir :
- un flanc porteur 24 qui surplombe le fond de filet 30 et est incliné d'un angle α par rapport à la normale à l'axe de l'assemblage, cet angle α étant identique à l'angle de flanc porteur mâle,
- un flanc d'engagement 26 qui est incliné d'un angle B par rapport à la normale à l'axe de l'assemblage, l'angle B étant légèrement supérieur à l'angle A de la figure 4B,
- un sommet de filet 28 disposé sur une surface conique de demi-angle au sommet γ identique à celui de la surface conique relative au filetage mâle,
- un fond de filet 30 également disposé sur une surface conique de demi-angle au sommet γ.

Les angles α et B sont différents, leur différence δ étant telle que les filets 22 sont moins larges à leur sommet 28 qu'à leur base.

ℓ2 représente la largeur du filet femelle à mi-hauteur tandis que ℓ4 représente l'espace entre dents de filet femelle à mi-hauteur ; la somme (ℓ2 + ℓ4) représente le pas du filet femelle qui est identique au pas du filet mâle.

Dans la configuration du joint fileté de la figure 4, ℓ1 est supérieur à ℓ4 et ℓ2 est supérieur à ℓ3 ce qui a pour conséquence que, lors du vissage, les deux flancs mâles 23, 125 vont à un moment donné compte tenu de la conicité des filetages venir en contact avec les deux flancs femelles 24, 26 ; en continuant le vissage les filets 21, 22 vont être soumis à un frettage axial, d'où le qualificatif de filets à frettage axial donné à ce type de filets.

Le figure 4C représente la position de filets mâle 21 et femelle 22 au moment du premier contact au cours du vissage.

Les flancs porteurs 23, 24 rectilignes d'angle α sont en contact réparti sur toute leur largeur commune.

Les sommets de filets 29, 28 sont encore éloignés des fonds de filets correspondants 30, 27.

Les flancs d'engagement 125, 26 sont en contact au point O qui est situé sur l'arc MP plus près de M que de P sur le flanc mâle 125 et également plus près de Q que de N sur le flanc femelle 26. Le contact a donc lieu du côté du sommet de filet mâle où est implantée la gorge 31.

Le contact décalé vers M résulte du fait que l'angle A de la tangente 39 au flanc bombé convexe 125 à mi-hauteur de filet est inférieur à l'angle B constant du flanc femelle rectiligne 26, le point O correspondant au point où la tangente au flanc bombé convexe 125 fait un angle égal à B par rapport à la normale à l'axe de l'assemblage.

Lorsque l'on poursuit le vissage au-delà de la position illustrée par la figure 4C, du fait des filetages coniques, les filets mâles tendent à pénétrer en coin dans les creux entre les filets femelles et réciproquement pour les filets femelles à pénétrer en coin dans les creux entre les filets mâles en générant une pression de contact frettant entre les flancs correspondants. Cette pression de contact augmente lorsque l'on poursuit le vissage du fait de la forme trapézoïdale des filets et de la conicité des filetages.

En l'absence de toute gorge sur des filets mâles et femelles trapézoïdaux classiques, compte tenu de la réalisation des filets en matériau à module d'élasticité élevée du genre acier, les deux flancs forment très vite une butée extrêmement rigide et on ne peut alors plus poursuivre le vissage.

Ceci ne serait pas un inconvénient grave si la géométrie des filets était parfaitement reproductible, ce qui n'est pas le cas.

Des tolérances normales d'usinage de ± 0,01 mm sur les largeurs de filet mâle et femelle sont susceptibles d'entraîner un écart de 0,02 mm sur le frettage axial ou serrage égal à (ℓ1 - ℓ4) ou (ℓ2 - ℓ3).

Cet écart se traduit du fait de la conicité des filetages par des écarts inacceptables de positionnement élément fileté mâle/ élément fileté femelle et il induit notamment des écarts d'interférence radiale au niveau des portées d'étanchéité 5, 6, donc des risques inacceptables de fuite en service.

La gorge 31 qui débouche sur le sommet de filet 29 adjacent au flanc d'engagement bombé convexe 125 permet aux deux parties 33, 35 de filet mâle 21 de se déformer par flexion sous la pression de contact frettant résultant de la poursuite du vissage au-delà du premier contact: la gorge 31 permet donc d'assouplir la structure du filet mâle 21 et de diminuer la rigidité du flanc d'engagement 125.

La déformation des deux parties 33, 35 de filet mâle est proportionnelle à la pression de contact étant donné que l'on fait travailler le matériau du filet mâle 21 dans le domaine élastique, le filet femelle plein 22 pouvant être considéré en première approximation comme rigide et la raideur du ressort constitué par la partie de filet 35 entre la gorge 31 et le flanc d'engagement flexible étant déterminée par la géométrie de cette partie de filet 35 et par l'élasticité du matériau, par exemple de l'acier, dont elle est constituée.

La courbure du flanc d'engagement mâle bombé convexe 125 permet de faire travailler la gorge de façon optimale: en l'absence d'une telle courbure, c'est-à-dire si le flanc d'engagement mâle était rectiligne d'angle égal à B, il y aurait rapprochement par translation des parties 33, 35 de la dent de filet mâle, ce qui conduirait à une diminution importante du rayon R2 à fond de gorge et à un risque de cisaillement de la racine des parties de filet 33, 35.

La courbure du flanc d'engagement mâle 125 permet au contraire la rotation progressive du flanc d'engagement bombé convexe 125 rendu ainsi flexible au cours de la poursuite du vissage ainsi qu'une répartition des pressions de contact selon la théorie de Hertz.

Le centre de rotation du flanc d'engagement flexible 125 est sensiblement situé en P, au pied du flanc d'engagement flexible 125.

La figure 4D illustre le positionnement des filets en fin de vissage.

La partie 35 du filet comprise entre gorge 31 et flanc d'engagement flexible 125 a tourné d'un certain angle pour permettre l'adaptation de l'encombrement entre flancs de filets mâles et femelles.

Le point de contact initial O s'est déplacé en O' en direction du point P le long de l'arc MP.

Un tel déplacement OO' est bénéfique car il permet de ne pas faire travailler toujours le même point des flancs d'engagement au cours du vissage et donc de limiter les risques de grippage.

On voit donc que l'on a intérêt à réaliser le premier contact en O sur la demi-largeur de l'arc MP opposée à P et si possible près de l'extrémité M opposée à P, c'est-à-dire du côté du sommet de filet 29 où est implantée la gorge 31.

Le choix du rayon de courbure R 1 du flanc bombé convexe 125 définit le déplacement OO' pour les angles A et B donnés.

Les graphiques suivants 8 à 10 résultent d'études sur des joints filetés du type VAM TOP® (selon catalogue VAM® n° 940 édité en juillet 1994 par Vallourec Oil & Gas) modifiés selon figure 4 et de caractéristiques suivantes :
- tubes en acier peu allié traités pour un grade API L80 (limite d'élasticité supérieure ou égale à 552 MPa) ;
- diamètre extérieur des tubes : 177,8 mm (7") ;
- épaisseur des tubes : 10,36 mm (29lb/ft) ;
- filetages de pas 6 mm et de conicité = 6,25 % (γ = 1,79°) ;
- hauteur de filet 1,8 mm ; largeur de filet 3,5 mm ;
- α = -3° ; B (angle de flanc d'engagement femelle) = 13°; δ = 10°;
- A (angle de flanc d'engagement mâle à mi-hauteur) variable entre 9°et 14° ;
- rayon R1 du flanc d'engagement mâle bombé convexe variable entre 5 et 20 mm;
- serrage (ou frettage axial FA) variable entre 0 et 0,14 mm (0,04 mm visé);
- profondeur de gorge : 1 mm ; largeur de gorge à son débouché = 1,4 mm ;
- rayon R2 de fond de gorge = 0,4 mm ;
- centre du fond de gorge situé à 2,3 mm du flanc porteur.

Le graphique de la figure 8 montre le déplacement DC du point de contact O le long de l'arc MP du flanc flexible 125 de la figure 4 en fonction du serrage FA sur le flanc d'engagement pour diverses valeurs de l'angle A compris entre 9° et 14°.

On constate sur la figure 8 que plus l'angle A est grand, plus le déplacement DC du flanc 125 est rapide.

Lorsque l'angle A est inférieur à l'angle B, on vérifie que le point de contact initial O est situé sur la demi-largeur de l'arc MP du côté opposé au centre de rotation P.

On ne peut avoir l'angle A inférieur à 9° car le point O risquerait alors d'être en dehors de l'arc MP au-delà de M.

Des valeurs de l'angle A supérieures à 12° ne sont pas non plus souhaitables car le point de contact final O' pourrait être au-delà de P pour certains couples d'éléments filetés mâle-femelle mal appariés.

Un fonctionnement en service avec un point de contact O' voisin de P apparaît en outre non optimal car il conduit à des concentrations de contrainte en pied de filet comme dans le cas d'un contact entre deux flancs rectilignes.

Une valeur de l'angle A de 10 ° paraît tout à fait adaptée dans le cas présent, le point de contact final O' conduisant à un pic de contrainte au pire situé à peine au-delà de la mi-largeur du flanc du côté de P.

La figure 9 montre sur les mêmes joints filetés l'évolution de l'angle de rotation RFE du flanc flexible 125 en fonction du serrage FA.

Là encore la rotation du flanc 125 est d'autant plus rapide que l'angle A est grand.

On a intérêt à choisir un angle A relativement faible (10°) de manière à limiter l'amplitude de la rotation avec le serrage.

De cette manière, la pression de contact variera peu en fonction du serrage réel obtenu.

Le graphique de la figure 10 montre pour le même type de joint fileté l'influence pour différents rayons de courbure R1 du flanc 125 l'influence du serrage FA sur le déplacement DC du point de contact, l'angle A étant maintenu constant et égal à 10°.

Pour un rayon de courbure R1 de 20 mm, le contact initial a lieu en M et le point de contact se déplace rapidement le long de l'arc MP au fur et à mesure du serrage.

Plus le rayon de courbure R1 est faible, plus le point de contact initial O se déplace vers P et plus la vitesse de déplacement diminue en fonction du serrage.

Un rayon R trop inférieur à 5 mm apparaît néfaste si l'on veut conserver un point de contact initial O sur la demi-largeur de l'arc MP opposée à P.

On peut ainsi convenablement choisir un rayon de courbure R1 du flanc d'engagement bombé convexe 125 entre 3 et 30 mm.

On obtient le même effet d'augmentation de la résistance du joint fileté au dévissage ou au survissage dans le cas de filets selon figure 4 que dans le cas de joints filetés avec sommets de filet bombés convexes selon la figure 3 mais l'augmentation de cette résistance est beaucoup plus importante dans le cas de filets à frettage axial avec flanc d'engagement bombé convexe que dans le cas des filets de la figure 3, le mécanisme d'augmentation de cette résistance étant toutefois identique à celui présenté à la figure 7.

La résistance très améliorée au dévissage a été constatée par des essais de vissage-dévissage qui ont été effectués sur deux joints filetés similaires à ceux présentés pour les essais des figures 8 à 10 mais présentant des caractéristiques géométriques distinctives opposées à celles de la figure 4 : l'élément fileté mâle est conventionnel avec un filet mâle à faces rectilignes tandis que l'élément fileté femelle comporte un filet femelle présentant un flanc d'engagement bombé convexe et une gorge débouchant en sommet de filet femelle.

Pour un angle entre tangente au flanc d'engagement femelle bombé convexe et normale à l'axe de l'assemblage (pris à mi-hauteur de filet) égal à 11 °, un rayon R1 de flanc d'engagement femelle bombé convexe égal à 10 mm et un serrage égal à 0,02 mm, le couple de dévissage T_{b} s'est élevé pour un des joints filetés à 130 % et pour l'autre joint fileté à 123 % du couple de vissage T_{f}.

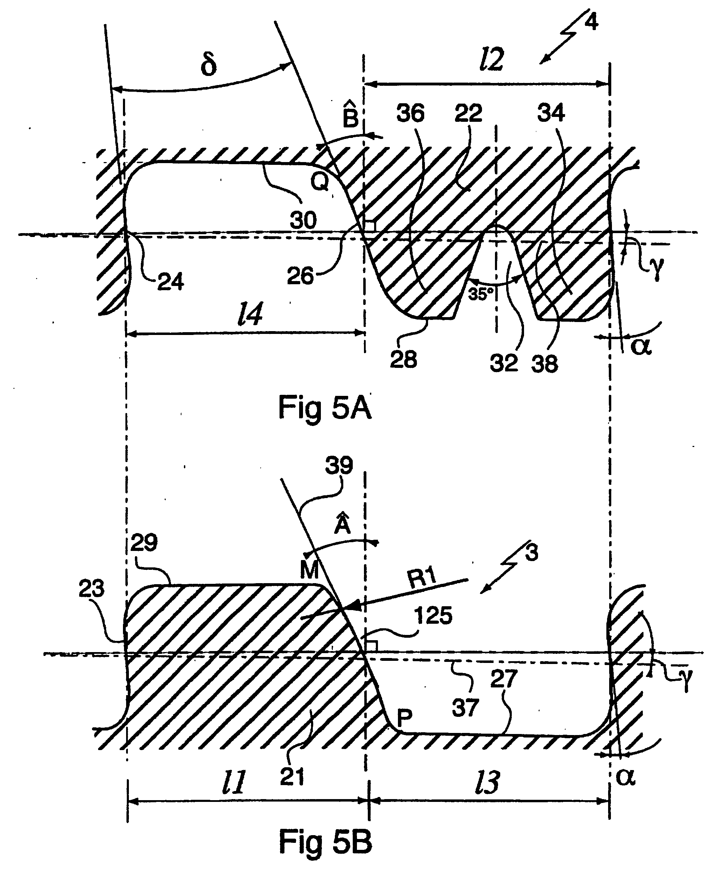

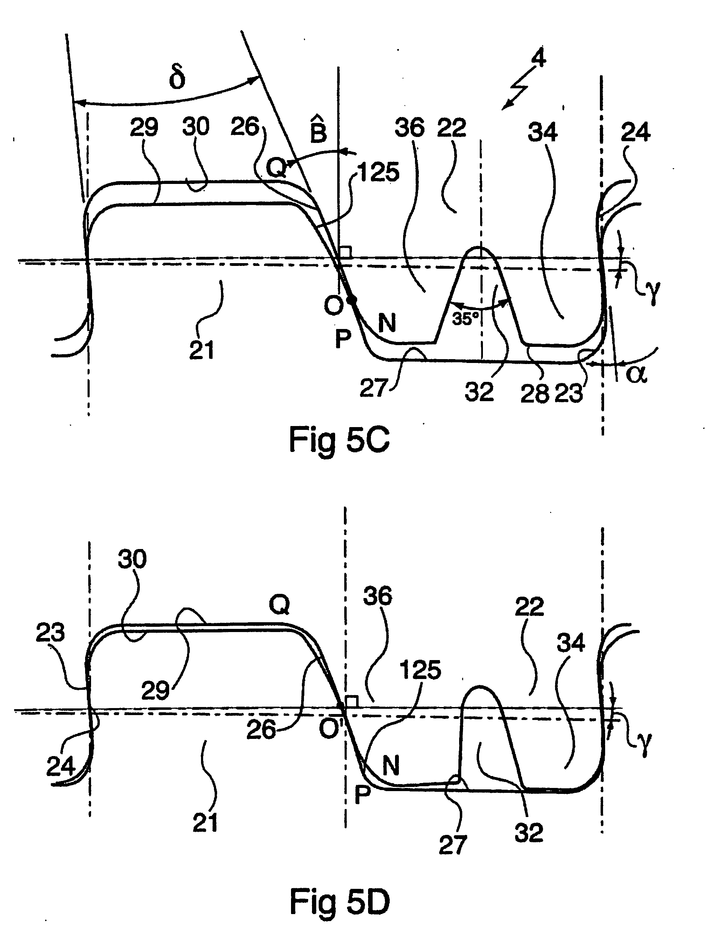

La figure 5 est une variante de la figure 4. Sur cette figure 5, le filet mâle 21 possède également un flanc d'engagement 125 bombé convexe d'angle A à mi-largeur de flanc mais il ne comporte pas de gorge.

Une gorge 32 est par contre disposée sur le filet femelle 22 et permet la flexion du flanc d'engagement femelle 26 rectiligne qui correspond au flanc d'engagement bombé convexe 125 en condition de contact frettant lors du vissage.

Dans la configuration de la figure 5, l'angle A est supérieur à l'angle B. Une telle configuration permet, comme on le voit aux figures 5C et 5D, un premier contact en O sur la demi-largeur du flanc d'engagement flexible 26 du côté du sommet de filet femelle 28 où est implantée la gorge 32. Cette configuration permet également le déplacement OO' du point de contact vers le centre de rotation Q.

Le fonctionnement du joint fileté de la figure 5 est par ailleurs similaire à celui décrit à la figure 4.

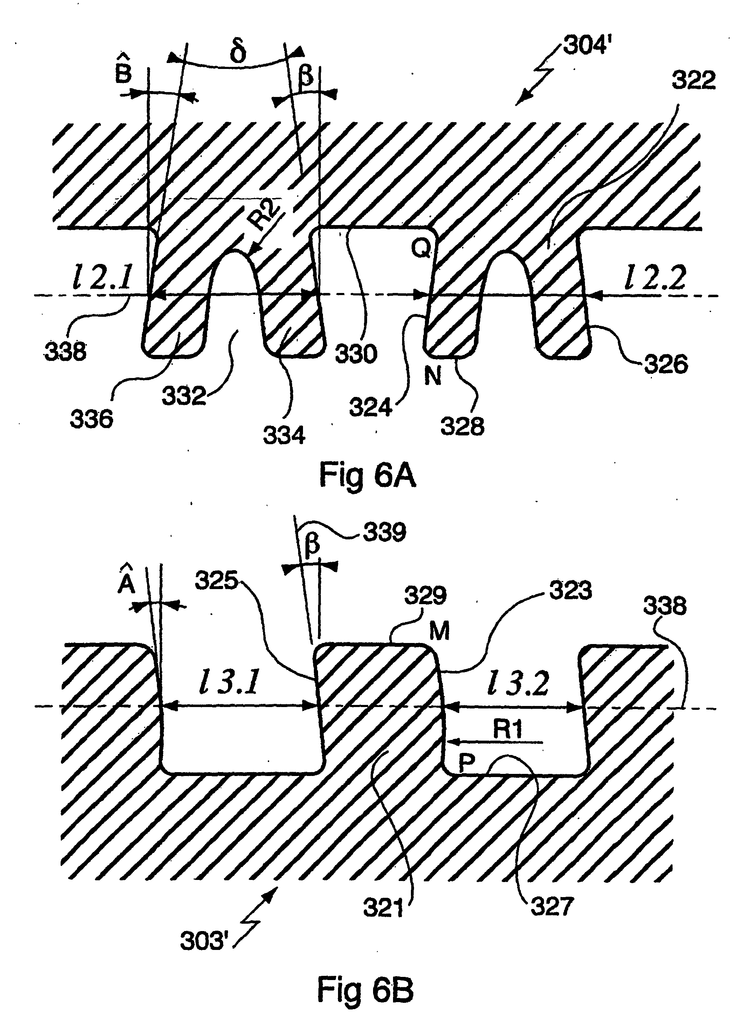

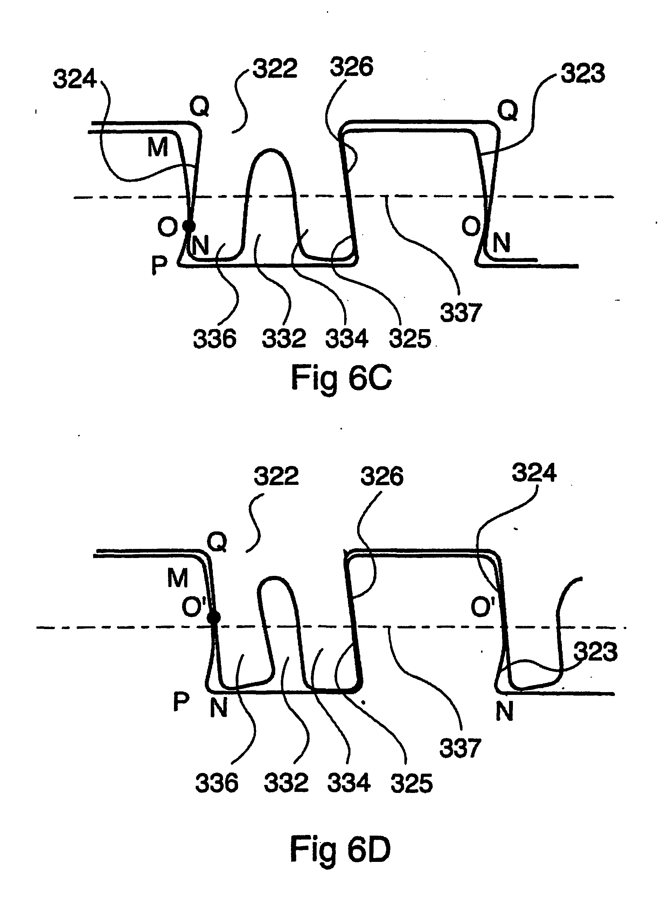

La figure 6 montre l'application au joint fileté 300 de la figure 2 d'un filet à gorge et flanc d'engagement bombé convexe à un filetage cylindrique à filets trapézoïdaux dits coins ou à largeur variable, de tels filetages à filets coins étant notamment connus par le brevet US Re 30647.

Le filetage mâle 303' de la figure 6B comprend des filets du genre trapézoïdal en queue d'aronde et à largeur variable.

Les filets trapézoïdaux mâles 321 comprennent :
- un sommet de filet 329 rectiligne parallèle à l'axe du joint fileté;
- un fond de filet 327 également rectiligne et parallèle à l'axe du joint fileté ;
- un flanc d'engagement 325 rectiligne qui surplombe le fond de filet 327, l'angle p entre flanc d'engagement et normale à l'axe de l'assemblage étant compté de ce fait négativement ;
- un flanc porteur 323 bombé convexe de rayon R1 (en dehors des raccordements avec les sommets et les fonds de filet).

Le flanc 323 est tel que la tangente 339 à mi-hauteur de filet fait un angle A avec la normale à l'axe de l'assemblage.

Les angles β et A sont tels que les filets sont plus larges à leur sommet 329 qu'à leur base (filets en queue d'aronde).

Ces filets sont dits à pas constant et à largeur variable parce que la largeur de filet augmente (et que par conséquent l'espace entre dents de filets diminue) lorsque l'on s'éloigne de l'extrémité libre de l'élément fileté: on a ainsi ℓ3.1 supérieur à ℓ3.2 sur la figure 7B.

Le filetage femelle 304' correspondant est représenté à la figure 6A.

Les filets femelles 322 sont du type connu en queue d'aronde à largeur variable et adaptés aux filets mâles 321.

Les sommets de filet 328 et fonds de filet 330 sont rectilignes et parallèles à l'axe de l'assemblage.

Les flancs porteurs 324 et d'engagement 326 sont également rectilignes ; ils surplombent tous deux les fonds de filets 330 de sorte que leurs angles respectifs B et β par rapport à la normale à l'axe de l'assemblage sont comptés négativement.

La largeur des filets ℓ2 à mi-hauteur diminue au fur et à mesure que l'on se rapproche de l'extrémité libre de l'élément de sorte que l'on a ℓ2.1 supérieur à ℓ2.2 sur la figure 6A.

Les filets femelles 322 comportent en outre sur toute leur longueur une gorge hélicoïdale 332 dont le profil présente un axe sensiblement normal à l'axe de l'assemblage et qui débouche sur le sommet de filet 328.

Cette gorge a un profil en V à fond arrondi de rayon R2 égal à 0,4 mm.

Lorsque l'on visse les filetages 303', 304' l'un dans l'autre, on commence par associer des filets de faible largeur dans des creux de grande largeur mais au fur et à mesure du vissage, ce jeu diminue jusqu'à s'annuler à un moment donné représenté à la figure 6C : les flancs porteurs mâle et femelle 323, 324 sont en contact ponctuel en O et les flancs d'engagement mâle et femelle 325, 326 sont en contact réparti.

Comme dans le cas de la figure 5, le point O est situé sur le segment NQ du côté du sommet de filet 328 où est implantée la gorge 332.

Ceci provient comme précédemment du fait que l'angle A est inférieur à l'angle B en valeur absolue.

Si l'on poursuit le vissage au-delà du simple contact entre flancs, des filets de plus en plus larges tendent à venir se placer dans des creux de plus en plus étroits : il y a alors frettage axial progressif en coin des flancs, d'où le qualificatif « coin » de ce type de filetage; comme dans le cas des figures 4 ou 5, on ne peut poursuivre le vissage que si l'on permet aux flancs de se déformer élastiquement.

La fonction de la gorge 332 avantageusement aidée par la forme bombée convexe du flanc porteur 323 est de permettre une telle déformation élastique des flancs.

Les fonctions de la gorge 332 et du flanc bombé convexe 323 sont semblables à celles des gorges 31, 32 et du flanc bombé convexe 125 des figures 4 et 5, le flanc flexible 324 étant rectiligne comme dans le cas de la figure 5.

On peut convenablement choisir le rayon de courbure R1 du flanc porteur mâle 323 pour accroître la résistance du joint fileté au dévissage ou au survissage par un mécanisme identique à celui présenté à la figure 7.

II est à noter que les joints filetés des figures 4 à 6 peuvent également être adaptés à des filetages coniques à filets coins à largeur variable du type divulgué dans le document WO 94/29627. Une telle adaptation est aisée pour l'homme du métier compte tenu des indications précédentes.

On peut ainsi réaliser en restant dans la portée de la présente invention un joint fileté tubulaire à frettage axial selon la figure 4 qui présente une interférence radiale entre les sommets d'un des filets, mâle ou femelle et le fond de filet conjugué en fin de vissage.

On peut aussi réaliser en restant dans la portée de la présente invention un joint fileté tubulaire à filetages coniques interférents dont les flancs porteurs mâles ou les flancs porteurs femelles sont bombés convexes et dont les filets mâles ou femelles présentent une gorge débouchant en sommet de filet pour accommoder les variations de contact entre flancs porteurs dues à des sollicitations variables de traction, de compression ou de flexion en service.

De telles variations de contact sont en effet susceptibles sur des filets pleins (=sans gorge) à flancs porteurs rectilignes d'induire le développement de fissures de fatigue ("pitting") sur ces flancs porteurs.

Les différents modes de réalisation de la présente invention décrits peuvent par ailleurs s'appliquer aussi bien à des assemblages filetés intégraux qu'à des assemblages filetés manchonnés.

On peut par exemple réaliser un joint fileté tel que sur les figures 11 dont les filets femelles (fig. 11A) trapézoïdaux possèdent des faces toutes rectilignes tandis que les filets mâles (fig. 11B) correspondants sont de forme générale également trapézoïdale mais avec un flanc porteur 123 bombé convexe comme sur la figure 6B.

La hauteur h1 des filets mâles est un peu inférieure à celle h2 des filets femelles et la largeur des filets mâles ou femelles est légèrement inférieure à celle des espaces entre filets correspondants comme sur les figures 3A, 3B de sorte qu'après vissage (fig. 11C) les sommets de filet femelles 28 interfèrent radialement avec les fonds de filet mâles 27 tandis qu'il existe un jeu radial entre sommets de filet mâles 29 et fonds de filet femelles 30. En outre les flancs porteurs mâles 123 et femelles 24 sont en appui tandis qu'il existe un jeu axial entre flancs d'engagement mâles 25 et femelles 26.

Les filets femelles 22 sont pleins alors que les filets mâles 21 présentent une gorge 31 semblable à celle de la figure 4, qui permet d'accommoder les variations de pression de contact en service.

La courbure du flanc porteur mâle 123 permet, outre les effets sur la résistance au survissage et au dévissage, très avantageusement, de maîtriser la largeur du contact et la localisation du contact entre flancs porteurs 123, 24 comme indiqué précédemment lorsque la face bombée convexe est un flanc d'engagement (voir figures 4 et 5).

Des effets similaires pourraient être obtenus en réalisant un flanc porteur femelle bombé convexe, le flanc porteur mâle étant rectiligne.

Des effets similaires pourraient également être obtenus sur des joints filetés à filetages coniques et filets dits "rugged threads" tels que décrits dans les documents EP 454 147 ou JP 08.281 061 dont les flancs porteurs mâles et femelles sont en appui tandis que les flancs d'engagement mâles et femelles sont en contact en fin de vissage, les filets d'au moins, un filetage comportant un flanc porteur ou un flanc d'engagement ou les flancs porteurs et d'engagement bombés convexes.

## Revendications

1. Joint fileté tubulaire (100, 300) comprenant un élément fileté mâle (1) en extrémité d'un premier tube (101, 301) et un élément fileté femelle (2) en extrémité d'un second tube (202, 302), l'élément fileté mâle comportant extérieurement un filetage mâle (103, 303) à filets trapézoïdaux sur sensiblement toute la longueur du filetage mâle, l'élément fileté femelle comportant intérieurement un filetage femelle (104, 304) à filets trapézoïdaux sur sensiblement toute la longueur du filetage femelle conjugué du filetage mâle, les filetages mâles et femelles étant vissés l'un dans l'autre sous un couple de vissage donné (T_{f}) de sorte qu'au moins une face de filet mâle (21, 321) est en contact sous pression de contact avec la face correspondante du filet femelle (22, 322), **caractérisé en ce qu'**au moins une face (125, 128, 325) de filet sous pression de contact possède avant vissage une forme bombée convexe continue sur la largeur de la face considérée et est en contact ponctuel avec la face correspondante (26, 27, 326) de l'élément conjugué, ladite face bombée convexe présentant sur sa largeur hormis au niveau des raccordements avec les faces adjacentes un ou des rayons de courbure (R1, R3) compris entre 2 et 60 mm.

2. Joint fileté tubulaire selon la revendication 1, **caractérisé en ce que** la face bombée convexe est réalisée sur toute la longueur du filetage concerné.

3. Joint fileté tubulaire selon la revendication 1 ou 2, **caractérisé en ce que** ladite face bombée convexe possède une courbure uniforme sur la largeur de ladite face bombée convexe hormis au niveau des raccordements avec les faces adjacentes et sur toute la longueur du filetage où elle est réalisée.

4. Joint fileté tubulaire selon l'une quelconque des revendications 1 à 3, **caractérisé en ce qu'**une face bombée convexe (125, 128, 325) d'un filetage (21, 321) correspond avec une face rectiligne (26, 27, 326) sur le filetage conjugué (22, 322).

5. Joint fileté tubulaire selon la revendication 4, **caractérisé en ce qu'**il ne comporte qu'une seule face bombée convexe disposée sur un seul des deux filetages.

6. Joint fileté tubulaire selon l'une quelconque des revendications 1 à 5, **caractérisé en ce que** les filetages mâles et femelles sont coniques à filets interférant radialement l'un sur l'autre et **en ce que** ladite face bombée convexe est un sommet de filet (128).

7. Joint fileté tubulaire selon l'une quelconque des revendications 1 à 5, **caractérisé en ce que** ladite face bombée convexe est un flanc de filet (125, 323) et **en ce que** l'un ou l'autre des filets, mâle (21) ou femelle (22, 322), comprend un moyen (31, 32, 332) pour rendre flexible le flanc bombé convexe (125) ou le flanc correspondant (26, 324) à celui-ci sur le filetage conjugué.

8. Joint fileté tubulaire selon la revendication 7, **caractérisé en ce que** le moyen pour rendre flexible le flanc bombé convexe ou le flanc correspondant à celui-ci est une gorge (31, 32, 332) disposée sur le sommet de filet (29, 28, 328) adjacent au flanc flexible.

9. Joint fileté tubulaire selon la revendication 8, **caractérisé en ce que** la profondeur de la gorge est inférieure ou égale à la hauteur du filet où elle est réalisée.

10. Joint fileté tubulaire selon la revendication 8 ou 9, **caractérisé en ce que** la gorge possède une largeur à son débouché inférieure ou égale aux 2/3 de la largeur du filet où elle est réalisée prise à mi-hauteur de filet.

11. Joint fileté tubulaire selon l'une quelconque des revendications 8 à 10, **caractérisé en ce que** le fond de la gorge est arrondi suivant un rayon (R2) supérieur ou égal à 0,2 mm.

12. Joint fileté tubulaire selon l'une quelconque des revendications 8 à 11, **caractérisé en ce que** l'angle (A) dit « de flanc bombé convexe » entre la tangente (39, 339) au flanc bombé convexe à mi-hauteur dudit flanc bombé convexe et la normale à l'axe de l'assemblage est différent de l'angle (B) dit « angle de flanc correspondant » entre la tangente (26, 326) au flanc correspondant au flanc bombé convexe prise également à mi-hauteur du dit flanc correspondant et la normale à l'axe de l'assemblage.

13. Joint fileté tubulaire selon la revendication 12, **caractérisé en ce que** les valeurs de l'angle de flanc bombé convexe (A) et de l'angle de flanc correspondant (B) sont telles que le premier contact (O) lors du vissage entre le flanc bombé convexe et le flanc correspondant a lieu sur le flanc flexible du côté du sommet de filet (29, 28, 328) où est implantée la gorge.

14. Joint fileté tubulaire selon la revendication 12 ou 13, **caractérisé en ce que** le signe de la valeur algébrique du décalage entre l'angle de flanc bombé convexe (A) et l'angle de flanc correspondant (B) est tel que le point de contact entre le flanc bombé convexe et le flanc correspondant se déplace au cours du vissage vers le centre de rotation du flanc flexible.

15. Joint fileté tubulaire selon l'une quelconque des revendications 12 à 14, **caractérisé en ce que** la valeur du décalage entre l'angle de flanc bombé convexe (A) et l'angle de flanc correspondant (B) est telle que le point de contact final (O') entre flanc bombé convexe et flanc correspondant se situe en dehors du quart de largeur du flanc flexible situé en extrémité de celui-ci du côté pied de filet.

16. Joint fileté tubulaire selon l'une quelconque des revendications 12 à 15, **caractérisé en ce que** la valeur absolue du décalage entre l'angle de flanc bombé convexe (A) et l'angle de flanc correspondant (B) est comprise entre 1° et 5°.

17. Joint fileté tubulaire selon l'une quelconque des revendications 7 à 16, **caractérisé en ce que** le flanc bombé convexe est un flanc porteur (323).

18. Joint fileté tubulaire selon l'une quelconque des revendications 7 à 16, **caractérisé en ce que** le flanc bombé convexe est un flanc d'engagement (125).

19. Joint fileté selon l'une quelconque des revendications 7 à 18, **caractérisé en ce que** le joint fileté est du type compris parmi ceux à filets interférents radialement, à filets dits "rugged threads", à filets frettant axialement, à filets coins à largeur variable.

20. Joint fileté tubulaire selon l'une quelconque des revendications 7 à 19, **caractérisé en ce que** chaque élément mâle et femelle comprend au moins une portée d'étanchéité, chaque portée d'étanchéité mâle (5, 305) interférant radialement avec une portée d'étanchéité femelle correspondante (6, 306) sur le joint fileté tubulaire à l'état vissé en position.

21. Joint fileté tubulaire selon l'une quelconque des revendications 1 à 20, **caractérisé en ce que** chaque élément mâle et femelle comprend au moins une surface annulaire transversale de butée, au moins une surface de butée mâle (7, 307) étant en appui contre une surface de butée femelle correspondante (8, 308) sur le joint fileté tubulaire à l'état vissé en position.

## Patentansprüche

1. Gewinde-Rohrverbindung (100, 300), die ein Außengewindeelement (1) am Ende eines ersten Rohrs (101, 301) und ein Innengewindeelement (2) am Ende eines zweiten Rohrs (202, 302) aufweist, wobei das Außengewindeelement außen ein Außengewinde (103, 303) mit trapezförmigen Gewindegängen über im wesentlichen die ganze Länge des Außengewindes und das Innengewindeelement innen ein dem Außengewinde entsprechendes Innengewinde (104, 304) mit trapezförmigen Gewindegängen über im wesentlichen die ganze Länge des Innengewindes aufweist, wobei das Außengewinde und das Innengewinde mit einem gegebenen Schraubmoment (T_{f}) ineinander geschraubt sind, so dass mindestens eine Außengewindefläche (21, 321) unter Druckkontakt mit der entsprechenden Fläche des Innengewindes (22, 322) in Kontakt steht, **dadurch gekennzeichnet, dass** mindestens eine unter Kontaktdruck stehende Gewindegangfläche (125, 128, 325) vor dem Schraubvorgang eine über die Breite der betroffenen Fläche durchgehende konvex gewölbte Form aufweist und mit der entsprechenden Fläche (26, 27, 326) des zugehörigen Elements in Punktkontakt steht, wobei die konvex gewölbte Fläche auf ihrer Breite mit Ausnahme in Höhe der Anschlüsse an die benachbarten Flächen einen Krümmungsradius oder Krümmungsradien (R1, R3) aufweist, die zwischen 2 und 60 mm liegen.

2. Gewinde-Rohrverbindung nach Anspruch 1, **dadurch gekennzeichnet, dass** die konvex gewölbte Fläche über die ganze Länge des betroffenen Gewindes ausgebildet ist.

3. Gewinde-Rohrverbindung nach Anspruch 1 oder 2, **dadurch gekennzeichnet, dass** die konvex gewölbte Fläche, mit Ausnahme in Höhe der Verbindungen mit den benachbarten Flächen, über ihre Breite und über die ganze Länge des Gewindes, auf der sie ausgebildet ist, eine gleichmäßige Krümmung aufweist.

4. Gewinde-Rohrverbindung nach einem der Ansprüche 1 bis 3, **dadurch gekennzeichnet, dass** eine konvex gewölbte Fläche (125, 128, 325) eines Gewindes (21, 321) einer geradlinigen Fläche (26, 27, 326) auf dem zugeordneten Gewinde (22, 322) entspricht.

5. Gewinde-Rohrverbindung nach Anspruch 4, **dadurch gekennzeichnet, dass** sie nur eine konvex gewölbte Fläche aufweist, die nur auf einem der beiden Gewinde angeordnet ist.

6. Gewinde-Rohrverbindung nach einem der Ansprüche 1 bis 5, **dadurch gekennzeichnet, dass** das Außengewinde und das Innengewinde konisch sind, mit radial miteinander interferierenden Gewindegängen, und dass die konvex gewölbte Fläche ein Gewindegangscheitel (128) ist.

7. Gewinde-Rohrverbindung nach einem der Ansprüche 1 bis 5, **dadurch gekennzeichnet, dass** die konvex gewölbte Fläche eine Gewindegangflanke (125, 323) ist, und dass der eine oder der andere Gewindegang, der Außen- (21) oder Innengewindegang (22, 322), ein Mittel (31, 32, 332) aufweist, um die konvex gewölbte Flanke (125) oder die dieser entsprechende Flanke (26, 324) auf dem zugehörigen Gewinde elastisch zu machen.

8. Gewinde-Rohrverbindung nach Anspruch 7, **dadurch gekennzeichnet, dass** das Mittel, um die konvex gewölbte Flanke oder die dieser entsprechende Flanke elastisch zu machen, eine Kehle (31, 32, 332) ist, die am Gewindegangscheitel (29, 28, 328) neben der elastischen Flanke angeordnet ist.

9. Gewinde-Rohrverbindung nach Anspruch 8, **dadurch gekennzeichnet, dass** die Tiefe der Kehle geringer als oder gleich der Höhe des Gewindegangs ist, auf dem sie ausgebildet ist.

10. Gewinde-Rohrverbindung nach Anspruch 8 oder 9, **dadurch gekennzeichnet, dass** die Kehle an ihrer Mündung eine Breite aufweist, die geringer als oder gleich 2/3 der Breite des Gewindegangs ist, auf dem sie ausgebildet ist, gemessen auf halber Höhe des Gewindegangs.

11. Gewinde-Rohrverbindung nach einem der Ansprüche 8 bis 10, **dadurch gekennzeichnet, dass** der Grund der Kehle gemäß einem Radius {R2) größer als oder gleich 0,2 mm abgerundet ist.

12. Gewinde-Rohrverbindung nach einem der Ansprüche 8 bis 11, **dadurch gekennzeichnet, dass** der "konvex gewölbte Flankenwinkel" genannte Winkel (A) zwischen der Tangente (39, 339) zur konvex gewölbten Flanke auf halber Höhe der konvex gewölbten Flanke und der Senkrechten zur Achse des Zusammenbaus sich vom "entsprechender Flankenwinkel" genannten Winkel (B) zwischen der Tangente (26, 326) zur der konvex gewölbten Flanke entsprechenden Flanke, ebenfalls auf halber Höhe der entsprechenden Flanke, und der Senkrechten zur Achse des Zusammenbaus unterscheidet.

13. Gewinde-Rohrverbindung nach Anspruch 12, **dadurch gekennzeichnet, dass** die Werte des konvex gewölbten Flankenwinkels (A) und des entsprechenden Flankenwinkels (B) so sind, dass der erste Kontakt (O) beim Schraubvorgang zwischen der konvex gewölbten Flanke und der entsprechenden Flanke auf der elastischen Flanke auf der Seite des Gewindegangscheitels (29, 28, 328) stattfindet, wo die Kehle ausgebildet ist.

14. Gewinde-Rohrverbindung nach Anspruch 12 oder 13, **dadurch gekennzeichnet, dass** das Vorzeichen des algebraischen Werts der Verschiebung zwischen dem konvex gewölbten Flankenwinkel (A) und dem entsprechenden Flankenwinkel (B) so ist, dass der Kontaktpunkt zwischen der konvex gewölbten Flanke und der entsprechenden Flanke sich während des Schraubvorgangs zum Drehzentrum der elastischen Flanke verschiebt.

15. Gewinde-Rohrverbindung nach einem der Ansprüche 12 bis 14, **dadurch gekennzeichnet, dass** der Wert der Verschiebung zwischen dem konvex gewölbten Flankenwinkel (A) und dem entsprechenden Flankenwinkel (B) so ist, dass der endgültige Kontaktpunkt (O') zwischen der konvex gewölbten Flanke und der entsprechenden Flanke sich außerhalb eines Viertels der Breite der elastischen Flanke befindet, die am Ende dieser Flanke auf der Seite des Gewindeganggrunds angeordnet ist.

16. Gewinde-Rohrverbindung nach einem der Ansprüche 12 bis 15, **dadurch gekennzeichnet, dass** der Absolutwert der Verschiebung zwischen dem konvex gewölbten Flankenwinkel (A) und dem entsprechenden Flankenwinkel (B) zwischen 1 und 5° liegt.

17. Gewinde-Rohrverbindung nach einem der Ansprüche 7 bis 16, **dadurch gekennzeichnet, dass** die konvex gewölbte Flanke eine Trägerflanke (323) ist.

18. Gewinde-Rohrverbindung nach einem der Ansprüche 7 bis 16,
**dadurch gekennzeichnet**, die konvex gewölbte Flanke eine Eingriffsflanke (125) ist.

19. Gewinde-Rohrverbindung nach einem der Ansprüche 7 bis 18, **dadurch gekennzeichnet, dass** die Gewindeverbindung von der Art ist, die zu denjenigen mit radial interferierenden Gewindegängen, mit "rugged threads" genannten Gewindegängen, mit axial reibenden Gewindegängen, mit Keilgewindegängen mit variabler Breite gehört.

20. Gewinde-Rohrverbindung nach einem der Ansprüche 7 bis 19, **dadurch gekennzeichnet, dass** jedes Einsteckelement und jedes Aufnahmeelement mindestens eine Dichtungsauflagefläche aufweist, wobei jede Einsteck-Dichtungsauflagefläche (5, 305) radial mit einer entsprechenden Aufnahme-Dichtungsauflagefläche (6, 306) auf der Gewinde-Rohrverbindung im in Stellung verschraubten Zustand interferiert.

21. Gewinde-Rohrverbindung nach einem der Ansprüche 1 bis 20, **dadurch gekennzeichnet, dass** jedes Einsteckelement und jedes Aufnahmeelement mindestens eine ringförmige Queranschlagfläche aufweist, wobei mindestens eine Einsteck-Anschlagfläche (7, 30) gegen eine entsprechende Aufnahme-Anschlagfläche (8, 308) auf der Rohr-Gewindeverbindung im in Stellung verschraubten Zustand anliegt.

## Claims

1. A threaded tubular connection (100, 300), comprising a male threaded element (1) at the end of a first pipe (101, 301) and a female threaded element (2) at the end of a second pipe (202, 302), the male threaded element comprising an external male threading (103, 303) with trapezoidal threads over substantially the whole length of the male threading, the female threaded element comprising an internal female threading (104, 304) with trapezoidal threads over substantially the whole length of the female threading that mates with the male threading, the male and female threadings being made up one inside the other with a given make-up torque (T_{f}) such that at least one male thread face (21, 321) is in contact pressure with the corresponding face of the female thread (22, 322), **characterized in that**, prior to make-up, at least one thread face (125, 128, 325) in contact pressure exhibits a continuous convexly rounded shape over the width of the face under consideration and is in point contact with the corresponding face (26, 27, 326) of the mating element, said convexly rounded face having, over its width except for the junctions with the adjacent faces, one or more radii of curvature (R1, R3) in the range 2 to 60 mm.

2. A threaded tubular connection according to claim 1, **characterized in that** the convexly rounded face is produced over the whole length of the threading under consideration.

3. A threaded tubular connection according to claim 1 or claim 2, **characterized in that** said convexly rounded face has a uniform curvature over the width of said convexly rounded face except for the junctions with the adjacent faces and over the entire length of the threading on which it is formed.

4. A threaded tubular connection according to any one of claims 1 to 3, **characterized in that** a convexly rounded face (125, 128, 325) of a threading (21, 321) corresponds with a rectilinear face (26, 27, 326) on the mating threading (22, 322).

5. A threaded tubular connection according to claim 4, **characterized in that** it comprises only one convexly rounded face disposed on only one of the two threadings.

6. A threaded tubular connection according to any one of claims 1 to 5, **characterized in that** the male and female threadings are tapered with threads which radially interfere with each other and **in that** said convexly rounded face is a thread crest (128).

7. A threaded tubular connection according to any one of claims 1 to 5, **characterized in that** said convexly rounded face is a thread flank (125, 323) and **in that** one or other of the threads, male (21) or female (22, 322), comprises a means (31, 32, 332) for rendering flexible the convexly rounded flank (125) or the flank (26, 324) corresponding thereto on the mating threading.

8. A threaded tubular connection according to claim 7, **characterized in that** the means for rendering flexible the convexly rounded flank or the flank corresponding thereto is a groove (31, 32, 332) disposed on the thread crest (29, 28, 328) adjacent the flexible flank.

9. A threaded tubular connection according to claim 8, **characterized in that** the depth of the groove is less than or equal to the height of the thread in which it is formed.

10. A threaded tubular connection according to claim 8 or claim 9, **characterized in that** the width of the opening of the groove is less than or equal to 2/3 of the width of the thread in which it is formed, measured at the mid-height thereof.

11. A threaded tubular connection according to any one of claims 8 to 10, **characterized in that** the bottom of the groove is rounded with a radius (R2) of 0.2 mm or more.

12. A threaded tubular connection according to any one of claims 8 to 11, **characterized in that** the angle (A) termed the "angle of the convexly rounded flank" formed between the tangent (39, 339) to the convexly rounded flank at the mid-height of said convexly rounded flank and the normal to the axis of the connection is different from the angle (B) termed the "angle of the corresponding flank" formed between the tangent (26, 326) to the corresponding flank to the convexly rounded flank, also taken at the mid-height of said corresponding flank, and the normal to the axis of the connection.

13. A threaded tubular connection according to claim 12, **characterized in that** the values of the angle (A) of the convexly rounded flank and the angle (B) of the corresponding flank are such that the first contact (O) during make-up between the convexly rounded flank and the corresponding flank takes place on the flexible flank on the side of the thread crest (29, 28, 328) where the groove is located.

14. A threaded tubular connection according to claim 12 or claim 13, **characterized in that** the sign of the algebraic value of the difference between the angle (A) of the convexly rounded flank and the angle (B) of the corresponding flank is such that the point of contact between the convexly rounded flank and the corresponding flank is displaced towards the centre of rotation of the flexible flank during makeup.

15. A threaded tubular connection according to any one of claims 12 to 14, **characterized in that** the value of the difference between the angle (A) of the convexly rounded flank and the angle (B) of the corresponding flank is such that the final point of contact (O') between the convexly rounded flank and the corresponding flank is located outside the quarter of the width of the flexible flank which is located at the end thereof on the thread root side.

16. A threaded tubular connection according to any one of claims 12 to 15, **characterized in that** the absolute value of the difference between the angle (A) of the convexly rounded flank and the angle (B) of the corresponding flank is in the range 1° to 5°.

17. A threaded tubular connection according to any one of claims 7 to 16, **characterized in that** the convexly rounded flank is a load flank (323).

18. A threaded tubular connection according to any one of claims 7 to 16, **characterized in that** the convexly rounded flank is a stabbing flank (125).

19. A threaded tubular connection according to any one of claims 7 to 18, **characterized in that** the threaded connection is of the type comprised among the connections with radially interfering threads, with threads termed "rugged threads", with axially interfering threads, with wedge threads having a variable width.

20. A threaded tubular connection according to any one of claims 7 to 19, **characterized in that** each male and female element comprises at least one sealing surface, each male sealing surface (5, 305) radially interfering with a corresponding female sealing surface (6, 306) on the threaded tubular connection in the made up position.

21. A threaded tubular connection according to any one of claims 1 to 20, **characterized in that** each male and female element comprises at least one annular transverse abutment surface, at least one male abutment surface (7, 307) bearing against a corresponding female abutment surface (8, 308) on the threaded connection in the made up position.
